Europäisches Patentamt

European Patent Office

Office européen des brevets

(19)

(11) Publication number: **0 158 984**
A2

# (12) EUROPEAN PATENT APPLICATION

(21) Application number: **85104439.6**

(22) Date of filing: **12.04.85**

(51) Int. Cl.⁴: **G 06 F 15/70**

(30) Priority: **13.04.84 JP 72761/84**
**13.11.84 JP 237600/84**

(43) Date of publication of application:
**23.10.85 Bulletin 85/43**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Nishiya, Takushi**
**17-12-303, Yutaka-cho**
**Sagamihara-shi Kanagawa-ken(JP)**

(72) Inventor: **Funabashi, Motohisa**
**4-6-4-505, Araisono**
**Sagamihara-shi Kanagawa-ken(JP)**

(74) Representative: **Strehl, Schübel-Hopf, Schulz**
**Widenmayerstrasse 17 Postfach 22 03 45**
**D-8000 München 22(DE)**

(54) **Method for determining a pair of corresponding points between images.**

(57) A transport network is constructed of transport paths which transport quantities of light possessed by respective pixels (102, 104) from one of two images (101, 103) to the other, and a pair of corresponding points between the two images is found on the basis of the magnitude of light transport between the pixels minimizing the cost of transportation or a distribution of such magnitudes.

A transport network model is constructed so that flows at inflow points corresponding to various points on one image and at outflow points corresponding to various points on the other image may become magnitudes of a feature quantity of the respectively corresponding points on the images, and a pair of corresponding points composed of the inflow point and the outflow point is determined on the basis of a distribution of the flows within the network model.

FIG. 10

Title of the Invention

Method for determining a pair of corresponding points between images

Background of the Invention

Field of the Invention

The present invention relates, in an apparatus for recognizing environment by the use of visual information, to a method for determining a pair of corresponding points between images which is well suited for recognizing a three-dimensional space on the basis of stereopsis or successive images.

Also the present invention relates, in an apparatus for measuring a position, a position measuring apparatus which is well suited for measuring the position or distance of an object by the use of a pair of image information derived at different positions or times from the identical object. The apparatus of this type is indispensable to various installations which control equipment with image information (for example, a robot having the sense of vision, an automatic controller for a vehicle adapted to respond to an exterior scene, and a process controller interlocked with industrial television).

Description of the Prior Art

As a prior-art method for recognizing environment on the basis of stereopsis, there has been one wherein

- 2 -

0158984

edges are detected from images obtained with both the eyes (hereinbelow, termed "a pair of stereo images"), and the corresponding edges are decided in consideration of the polarities of the edges, to recognize a solid body (Takeshi Hirose, "Technique for Recognizing Solid Obstacle on the basis of Stereopsis", in the 'Transactions of the Society of Instrument and Control Engineering', Vol. 19, No. 8, pp. 50 - 56). This technique has had such disadvantages that the adjustment of a slice level for edge extraction is difficult and that misrecognition is sometimes involved in an image where edges are periodically distributed.

In addition, as prior-art methods for recognizing environment on the basis of successive images, there have been, e. g., a method based on optical flow (B. K. P. Horn and B. G. Schunk: Determining Optical Flow, Artificial Intelligence 17 (1981) 185 - 203) and a matching method (L. Dreschler and H. H. Nagel: On the Frame-to-Frame Correspondence between Grayvalue Characteristics in the Images of Moving Objects, German Workshop on Artificial Intelligence, 81, 18/21, 1981, Springer-Verlag). The former has had numerous restrictions such as the fact that it can be used for only an object whose surface brightness changes smoothly, and the range of application thereof has been limited.

- 3 -

0158984

The latter has involved such a disadvantage that the selection of feature points in a number sufficient for expressing an object is difficult.

Further, in the position measuring apparatus of the type specified before, which point of the other image a certain point of one image corresponds to needs to be determined by automatic processing. One of prior-art methods therefor is described in "Science", Vol. 194, 15 October 1976, pp. 283 - 287 (D. Marr and T. Poggio, "Cooperative Computation of Stereo Disparity").

This method is capable of parallel computation, and is therefore suitable for high speed processing. Since, however, it finds the corresponding relation between pixels as to the images each consisting of pixels quantized to two levels, the correspondence is rough. In other words, a certain pixel of one image cannot be caused to correspond to the intermediate position of the pixels of the other image. As a result, the accuracy of a calculated position is unsatisfactory.

Summary of the Invention

A first object of the present invention is to provide a method for recognizing environment which can readily detect corresponding points in a pair of stereo images or successive images and which causes misrecognition little.

A second object of the present invention is to provide a method which precisely detects the corresponding points between a pair of images thereby to improve the accuracy of positional measurement.

To the accomplishment of the first object, the present invention has its first characterizing feature in constructing a transport network which is composed of transport paths for transporting the quantities of light of respective pixels from one of two images to the other, and finding the corresponding images from that transport volume between pixels or that distribution of transport volumes at which the cost of transportation is minimized.

For example, in case of detecting edges from a pair of stereo images to decide the corresponding edges, misrecognition sometimes occurred. The reason is that only the polarities of the edges are considered without taking the intensities thereof (the varying rates of brightness) into account.

As the characteristic of a pair of stereo images, the difference of the images observed from both the eyes is slight, and the image of a certain object is observed as almost equal brightnesses in the images of both the eyes. Accordingly, the corresponding points are determined by finding regions of the same brightness from the images of both the eyes or by finding points
of equal changes in brightness, whereby the misrecognition
can be lessened.

In a first embodiment, corresponding pixels are
found on the basis of the transport volume between pixels
at which the cost of transportation is minimized in
a transport network for transporting the quantities
of light of respective pixels between two images obtained
with both the eyes.

Besides, as regards successive images, in case
of detecting corresponding points between the two successive
images, if the sampling interval of the images is sufficiently
short, the rate of change in the position or brightness
of an object is slight between the images. Accordingly,
a region having a certain brightness or a position changing
in brightness within one image exists near the same
position within the other image. When this property
is utilized, the detection of the corresponding points
between the two images can be converted into finding
the optimum route in the case of constructing a transport
network which is furnished with transport paths from
the respective pixels of one image to pixels near the
same positions of the other image, and then conveying the
brightnesses or the rates of change in brightness from
one image to the other image through the network.

In a second embodiment, the corresponding pixels are found on the basis of the distribution of the transport volumes between pixels at which the cost of transportation is minimized in the aforementioned transport network.

To the accomplishment of the second object, the present invention has its second characterizing feature in using a transport network model which has inflow points corresponding to the respective points of one image and outflow points corresponding to the respective points of the other image and in which the flows of the respective inflow points and outflow points are set in conformity with the magnitudes of a feature quantity (such as the brightness or the rate of change in brightness) of the corresponding points on the images, and determining a pair of corresponding points consisting of the inflow point and the outflow point from the distribution of flows within the network.

The transport network model is realized as an electric circuit by way of example, and it is possible to cause the flows to correspond to current values and the transport paths between the various points to correspond to resistances. It is assumed that fixed current sources of values equivalent to the magnitudes of the feature quantity of the corresponding points on the images exist at the respective inflow points and outflow points, and steady solutions are obtained by adjusting the values of the resistances. On this occasion, the value of a current flowing from the inflow point to the outflow point denotes the degree of correspondence between those points on the images which correspond to the inflow and outflow points.

Since the deviation of corresponding points between two images to be processed is usually slight, the extent of outflow points to be connected to each inflow point (namely, the number of transport paths) is not very large. Accordingly, automatic processing which employs the transport network model as stated above becomes practical.

Brief Description of the Drawings

Fig. 1 is a camera arrangement diagram for stereopsis;

Fig. 2 is a diagram showing a method of constructing small regions within images;

Fig. 3(a) is a diagram showing the mean brightnesses of the respective small regions of right eye's image, while Fig. 3(b) is a diagram showing the mean brightnesses of the respective small regions of left eye's image;

Fig. 4 is a diagram showing the arrangement of a network;

Fig. 5 is a diagram showing the calculated results of corresponding points;

Fig. 6(a) is a diagram showing the mean brightnesses of the respective small regions of right eye's image, while Fig. 6(b) is a diagram showing the mean brightnesses of the respective small regions of left eye's image;

Fig. 7 is a diagram showing the calculated results of corresponding points;

Figs. 8(a) and 8(b) are diagrams showing the mean brightnesses of every 4 x 4 pixels derived from successive images;

Figs. 9(a) and 9(b) are diagrams showing results obtained by subjecting the mean brightnesses of Figs. 8(a) and 8(b) to second-order differentiation respectively;

Fig. 10 is a diagram for explaining transport paths which are set for the successive images;

Figs. 11(a) and 11(b) are diagrams showing results obtained by detecting corresponding points;

Fig. 12 is a block diagram of the whole system of a corresponding point-determining apparatus according to the present invention;

Fig. 13 is a block diagram of the whole system of a three-dimensional distance measuring apparatus according to the present invention;

Fig. 14 is a model diagram of corresponding points in the case of stereopsis;

Fig. 15 is a sketch of images for explaining pre-processing in the case of stereopsis;

Fig. 16(a) is a connection diagram of a transport network model for determining corresponding points on corresponding scanning lines, while Fig. 16(b) is a graph of weighting coefficients which are used for updating resistance values;

Fig. 17 is a model diagram showing the relationships between the positions of corresponding points on images and the positions of measured points;

Figs. 18(a) and 18(b) to Figs. 20(a) and 20(b) are graphs each showing an example of processed results according to the present invention; and

Fig. 21 is a connection diagram of a transport network model in the case of determining corresponding points in a range of two dimensions.

Detailed Description of the Preferred Embodiments

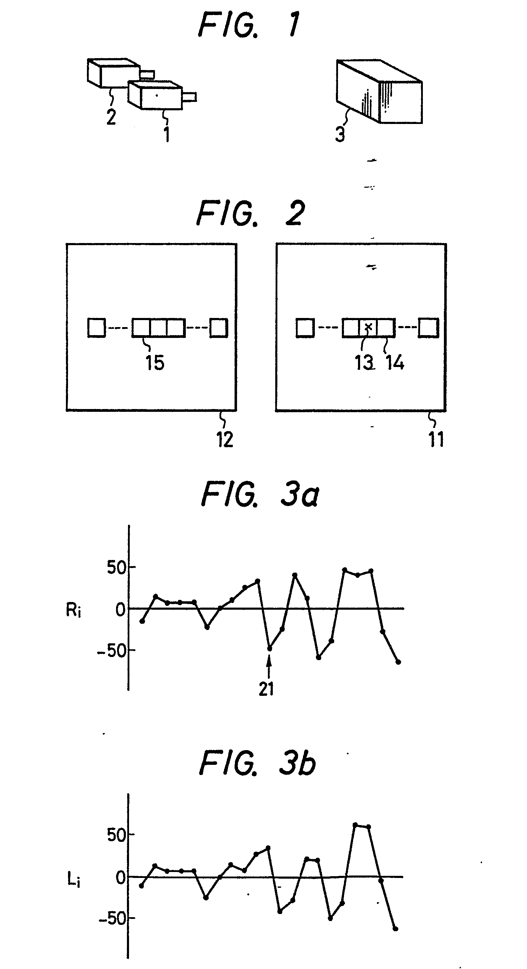

Now, the first embodiment of the present invention for accomplishing the first object will be described with reference to Figs. 1 - 7. Fig. 1 is a view showing the arrangement of cameras for constructing stereopsis. While the present embodiment will be explained as to an example in which the cameras are arranged in the horizontal direction, they may well be arranged in the vertical direction or in oblique directions.

In the present embodiment to be stated below, there will be referred to a method wherein one point to be noted is set within the image of one eye and wherein a corresponding point is detected from the image of the other eye.

First, as shown in Fig. 2, small regions of certain size are set around the point of note and in a direction coupling the centers of the right and left images, and the mean brightness of each small region is obtained. Now, letting $\underline{n}$ denote the number of the small regions, and $I_i$ denote the mean brightness of the i-th small region, a flow as indicated by Eq. (1) is evaluated:

$$A_i = I_i - \sum_{j=i-2}^{i+2} I_j \quad (i = 3, 4, \ldots, n - 2)$$

$$\ldots (1)$$

Results obtained by such procedure for certain images of the right eye and the left eye are shown in Figs. 3(a) and 3(b). Here, an arrow indicates the small region which includes the point of note.

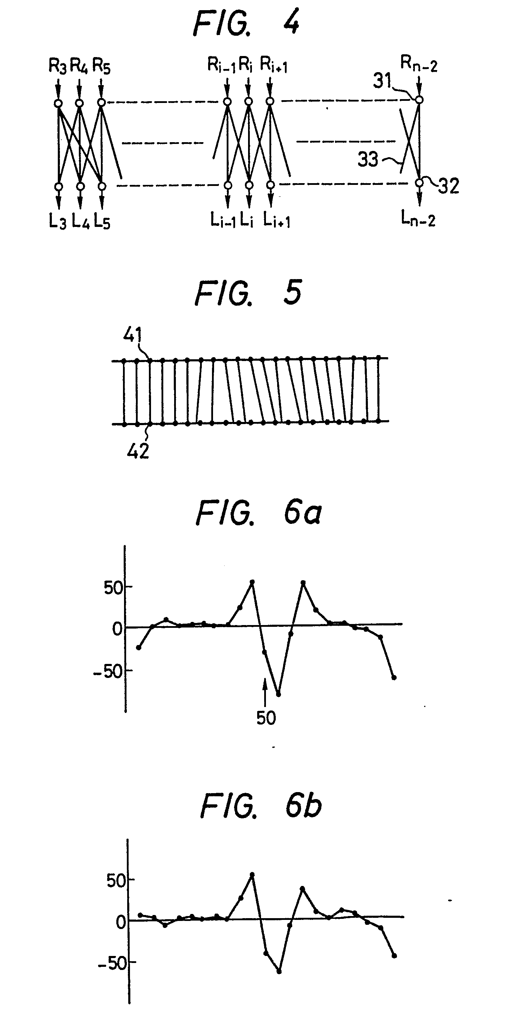

A network, in which the magnitudes of the right eye evaluated from Eq. (1) are denoted by $R_i$ (i = 3, 4, $\ldots$, n - 2) and the magnitudes of the left eye by $L_i$ (i = 3, 4, $\ldots$, n - 2) and in which they are outflow and inflow magnitudes, is organized as shown in Fig. 4.

The cost of transportation per proper unit flow is set for each branch of the network, and the flow which permits transport at the minimum expense is found.  Letting $X_{i-1}$, $X_i$ and $X_{i+1}$ denote flows from the i-th nodal point of right eye's image to the (i — 1)-, i- and (i + 1)-th nodal points of left eye's image, respectively, the position of the left eye corresponding to the i-th nodal point of right eye's image is found as:

$$i + (X_{i+1} - X_{i-1})/R_i \qquad \qquad ...(2)$$

Results with the corresponding points obtained from the transport volumes of the minimum expenses for the example of Figs. 3(a) and 3(b) are shown in Fig. 5.

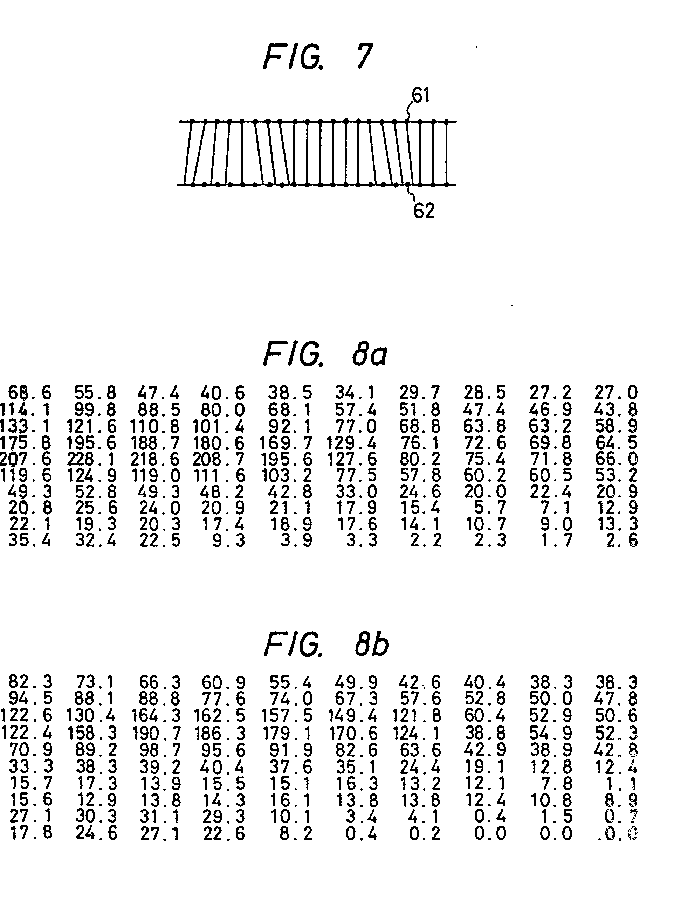

The left eye image is moved so that the corresponding points of the nodal points including the point of note may be superposed, and small regions which are still smaller than the aforementioned small regions are set, whereupon the corresponding points are found.  The brightnesses of the respective smaller regions are shown in Figs. 6(a) and 6(b), while the calculated results of the corresponding points are shown in Fig. 7.

This procedure is repeated whilst reducing the size of the smaller region gradually, whereby the corresponding point of left eye's image to the noted point of right eye's image can be found.

Although, in the embodiment, the magnitudes of outflow or inflow to each nodal point has been evaluated with Eq. (1), the mean brightness $I_i$ of the i-th small region can also be directly used as the outflow or inflow magnitude.  Besides, the rate of change in brightness

as given by:

$$A_i = I_i - I_{i-1} \qquad \qquad ...(3)$$

can be used as the outflow or inflow magnitude.

Although, in the embodiment, the arrangement of the branches of the network and the cost per unit flow through each branch have been fixed, it is also possible to lessen misrecognition in such a way that calculations are repeatedly performed whilst altering the arrangement of the branches or/and the cost per unit flow.  That is, calculations are repeated while the number of branches is being increased in a direction toward the corresponding point of the left eye from each nodal point of the right eye found from the result of one time of calculation or while the cost per unit flow in the direction is being decreased, whereby misrecognition can be lessened.

Next, the second embodiment of the present invention will be described with reference to Figs. 8(a) - 11(b).

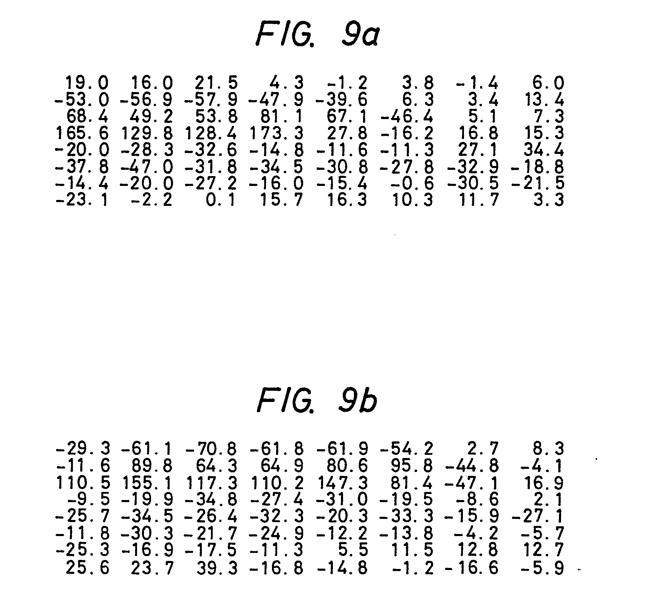

Figs. 8(a) and 8(b) show some of mean brightnesses evaluated every 4 x 4 small regions for successively obtained images.  Figs. 9(a) and 9(b) show results obtained by subjecting the respective brightness values of Figs. 8(a) and 8(b) to the second-order differentiation indicated in Eq. (4):

$$A'(i, j) = 4 * A(i, j) - A(i + 1, j) - A(i - 1, j)$$
$$- A(i, j + 1) - A(i, j - 1)) \quad ...(4)$$

$A(i, j)$: mean brightness of $4 \times 4$ regions,

$A'(i, j)$: second-order differential value of $A(i, j)$.

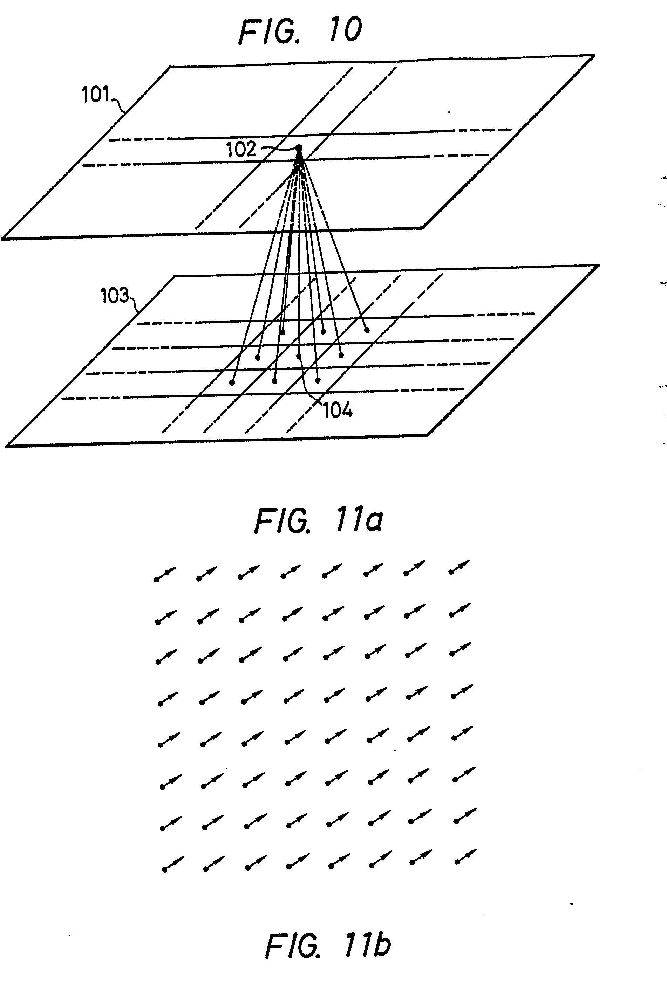

In order to detect the corresponding points between Figs. 9(a) and 9(b), transport paths as shown in Fig. 10 are constructed. That is, transport paths are set from the (i, j)-th pixel 102 of the image 101 obtained at a time $t$ to the (i', j')-th (i' = i − 1, i, i + 1 and j' = j − 1, j, j + 1) pixels of the image 103 obtained at a time (t + 1). Letting $A'(i, j)$ denote the second-order differential value of the (i, j)-th pixel 102 of the image 101 at the time $t$, and $B'(i, j)$ denote the second-order differential value of the (i', j')-th pixel 104 of the image 103 at the time (t + 1), the magnitudes of inflow from the respective pixels to the transport paths are set as follows:

(i, j)-th pixel at time $t$: $A'(i, j)$,

(i', j')-th pixel at time (t + 1): $-B'(i, j)$.

More specifically, in the pixel (i, j) at the time $t$, $A'(i, j) > 0$ indicates the magnitude of inflow, and $A'(i, j) < 0$ the magnitude of outflow. Conversely, in the pixel (i', j') at a time (t − 1), $B'(i', j') > 0$ indicates the magnitude of outflow, and $B'(i', j') < 0$ the magnitude of inflow.

Under the above conditions, the following minimum cost flow problem is considered:

⌐Under conditions:¬

$$\sum_{(i',\ j') \in N_{t-1}} X(i,\ j)(i',\ j')$$

$$= \begin{cases} A'(i,\ j) - D(i,\ j) & ((i,\ j) \in E_t), \\ A'(i,\ j) & ((i,\ j) \notin E_t), \end{cases}$$

$$...(5)$$

$$\sum_{(i,\ j) \in N_t} X(i,\ j)(i',\ j')$$

$$= \begin{cases} B'(i,\ j) - D(i,\ j) & ((i,\ j) \in E_{t-1}), \\ -B'(i,\ j) & ((i,\ j) \notin E_{t-1}), \end{cases}$$

$$...(6)$$

minimize

$$Z = \sum_{(i,\ j) \in N_t} \sum_{(i',\ j')\in N_{t-1}} (i,\ j)i',\ j') \left| X(i,\ j)(i',\ j') \right|$$

$$...(7)$$

Here, $X(i,\ j)(i',\ j')$ denotes the flow from the pixel $(i,\ j)$ to the pixel $(i',\ j')$ (provided that a minus flow can exist). $N_t$ and $N_{t-1}$ denote the sets of the pixels at the time $\underline{t}$ and the time $(t-1)$ respectively, $E_t$ and $E_{t-1}$ the sets of pixels located at end parts of the images among the pixels at the time $\underline{t}$ and the time $(t-1)$ respectively, and $C(i,\ j)(i',\ j')$ a cost factor for $X(i,\ j)(i',\ j')$. In addition, $D(i,\ j)$ and $D(i',\ j')$

denote dummy flows for the pixels located at the end parts of the images. The reason why such dummy flows are introduced, is that the differences between the images at the times $\underline{t}$ and $(t - 1)$ attributed to the movement of the object need to be canceled.

$C(i, j)(i', j')$ is set as follows:

$$C(i, j)(i', j') = \sqrt{(i, i')^2 + (j, j')^2} \qquad ...(8)$$

That is, the flows between the pixels located at the same positions in the images of the times $\underline{t}$ and $(t - 1)$ are set to be small.

From the solution of the minimum cost flow problem, the corresponding point $(p_i', p_j')$ within the image of the time $(t - 1)$ to the pixel $(i, j)$ is given by:

$$P_i' = i + \sum_{(i', j') \in N_{t-1}} |X(i, j)(i', j')| \times (i' - i)/T$$

$$P_j' = j + \sum_{(i', j') \in N_{t-1}} |X(i, j)(i', j')| \times (j' - j)/T$$

$$...(9)$$

Here, T is expressed as:

$$T = \sum_{(i', j') \in N_{t-1}} |X(i, j)(i', j')|$$

Fig. 11(a) shows parts corresponding to Fig. 10 as extracted from results obtained in this way. The directions of arrows indicate the directions in which the images of the respective pixels have moved, and the lengths thereof indicate the magnitudes of the movements.

Regarding the movement magnitude, a length indicated in Fig. 11(b) corresponds to a movement for two pixels.

It is also possible to enhance the detection accuracy of corresponding points by repeating the procedure in which the corresponding points thus found are replaced with $(i', j')$, the cost factors for the respective transport paths are altered in accordance with Eq. (8) and the minimum cost flow problem of Eqs. (5) - (7) is solved.

Although, in the present embodiment, the second-order differential value of the brightness in each pixel has been used as the quantity flowing through the transport path, it is also allowed to utilize the brightness of each pixel, a value obtained through a Laplacian filter, a deviation from a brightness obtained as a floating average, or the like.

Besides, to the end of enhancing the detection accuracy of corresponding points, it is also possible to divide each image into small regions, to subject the mean brightnesses thereof to the processing stated before, and to reduce the size of the small regions gradually. The procedure of gradually reducing the size of the small regions may well be differentiation or gradual reduction in the size of the Laplacian filter in the case of using the filter.

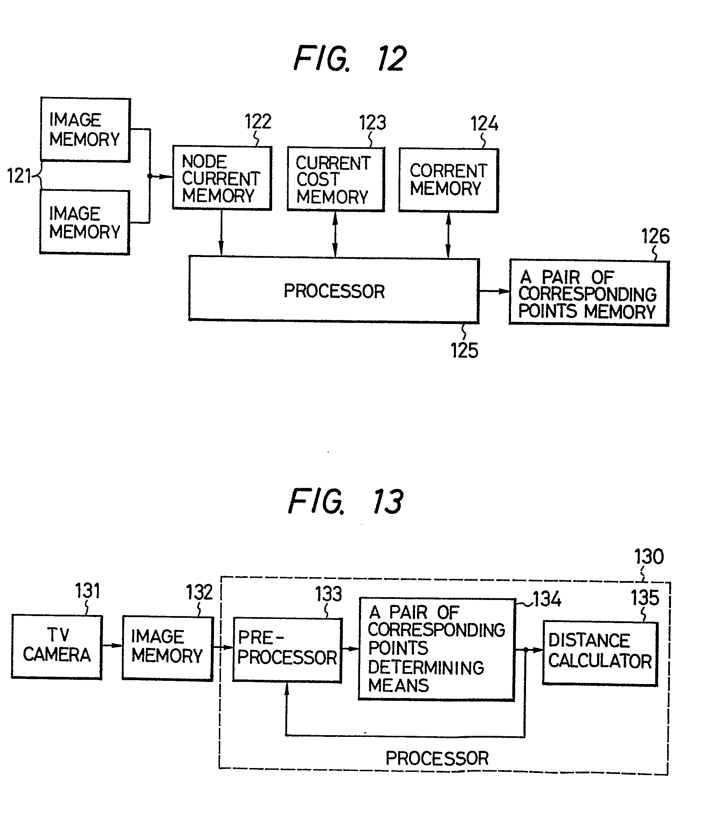

Fig. 12 is a block diagram of the whole system of an apparatus for determining a pair of corresponding points between images in accordance with the present invention. Every two image data for determining the corresponding points are stored in image memories 121. The data of the image memories 121 are subjected to mean value calculations or to pre-processing with differentiation filters, whereupon they are sent to a node current memory 122 as the magnitudes of outflow and inflow at the nodal points of a transport network. Using the data of a current cost memory 123, which stores the current costs of the respective branches of the transport network, and the data of the node current memory 122, the minimum cost flow calculation is performed in a processor 125, and the resulting currents of the respective branches are stored in a current memory 124. Calculations for determining the corresponding points are performed in the processor 125 by the use of the data of the current memory 124, and the result is stored in a pair of corresponding points-memory 126.

In case of precisely determining the corresponding points, the calculations for determining the corresponding points are performed in the processor 125 by the use of the data of the current memory 124, the result is used for altering the data of the current cost memory 123, and the minimum cost flow calculation is performed by the processor 125 again.

After repeating this procedure several times, the calculations for determining the corresponding points are performed using the data of the current memory 124. Then, the precise determination of the corresponding points is possible.

As set forth above, according to the present invention, in determining corresponding points in a pair of stereo images, the brightnesses of the respective parts of the images or/and the rates of change in brightness thereof can also be considered. This achieves the effect that misrecognition can be lessened.

In addition, the detection of corresponding points between successive images can be converted into a problem for finding the minimum cost flow in a network. This achieves the effect that the corresponding points can be readily detected by repeating simple calculations.

Next, the third embodiment of the present invention for accomplishing the second object will be described with reference to Figs. 13 - 21.

Fig. 13 is a block diagram of the whole system of a three-dimensional distance measuring apparatus to which the present invention is applied. Information expressive of an image picked up by a TV camera 131 is once stored in an image memory 132. In case of stereopsis, two images simultaneously picked up from different positions are stored. However, in the presence of the relative movement between a measuring instrument and an object to be measured, two images picked up at different times may well be stored. In this example, a processor 130 is composed of a pre-processor 133, a pair of corresponding points-determining means 134 and a distance calculator 135. The pre-processor 133 reads out the image information from the image memory 132, calculates the mean brightnesses of respective small regions of proper size, the rates of change in brightness relative to the adjacent regions, or the like, and sends the results to the corresponding points-determining means 134. The corresponding points-determining means 134 evaluates the corresponding relation between the small regions by the use of the received data and gives the pre-processor 133 instructions on the basis of the result. In accordance with the instructions, the pre-processor 133 performs the alteration of the regions, the shift of the image data, etc. and thereafter executes the above-stated pre-processing again. When such processing has been repeated a suitable number of times and the calculated result of the corresponding relation has sufficiently converged, this calculated result is sent to the three-dimensional distance calculator 135, in which a position is calculated.

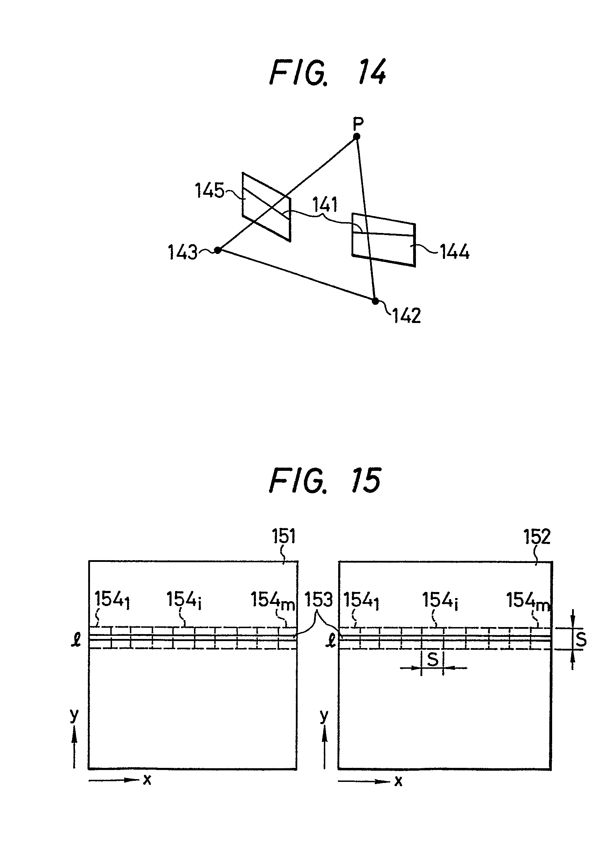

Hereinbelow, the details of the processes in the respective portions will be explained by taking the case of stereopsis as an example. In the case of stereopsis, two TV cameras 131 corresponding to the right and left eyes are disposed, and their positions are known. In this case, search for corresponding points can be localized or limited on epipolar lines. As shown in Fig. 14, the "epipolar lines" are the lines of intersection 141 between a plane, which is determined by the three points of the lens center 142 of the right camera, the lens center 143 of the left camera and an object point P, and the images 144 and 145 of the respective cameras (refer to 'Jōhō-Shori (Information Processing)', Vol. 24, No. 12, p. 1449, "Study on Image Understanding in U. S. A."). The image memory 132 stores the image information as converted so that the epipolar lines may agree with the corresponding scanning lines of both the images. Owing to the storage in such form, it suffices to examine the corresponding relation between points on the corresponding scanning lines of both the images.

Next, the process in the pre-processor 133 will be elucidated. Referring to Fig. 15, scanning lines 153 to be handled for the determination of corresponding points in left eye's image 151 and right eye's image 152 agree with epipolar lines. The pre-processor 133 takes up small regions $154_i$ (i = 1, 2, ..., m) of S x S pixels including the scanning lines 153 centrally, and calculates the mean brightnesses of the small regions in accordance with the following equations:

$$AR(i) = \left\{ \sum_{y=\ell-\frac{s}{2}+1}^{\ell+\frac{s}{2}} \sum_{x=(i-1)s}^{i_s-1} RI(x, y) \right\} / s^2$$

$$...(10)$$

$$AL(i) = \left\{ \sum_{y=\ell-\frac{s}{2}+1}^{\ell+\frac{s}{2}} \sum_{x=(i-1)s}^{i_s-1} LI(x, y) \right\} / s^2$$

$$i = 1, 2, ..., m$$

Here, $\underline{s}$ denotes the number of pixels of one side of the small region, RI(x, y) and LI(x, y) denote the magnitudes of brightness possessed by the pixels of right eye's image and left eye's image at a position (x, y) respectively, $\ell$ denotes No. of the scanning line to determine the corresponding point and to evaluate a three-dimensional distance, and $\underline{m}$ denotes the number of the small regions.

Subsequently, using the brightnesses of the respective small regions thus obtained, the rates of change in brightness (differential values) are calculated in accordance with the following equations:

$$BR(i) = AR(i + 1) - AR(i)$$
$$BL(i) = AL(i + 1) - AL(i) \qquad \Big\} \quad ...(11)$$
$$i = 1, 2, ..., m - 1$$

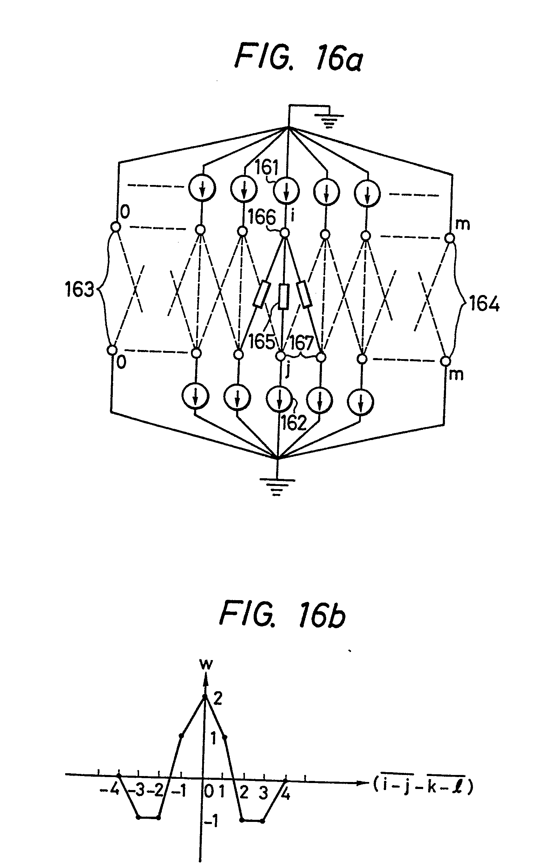

The above is the content of the process in the pre-processor 133. Next, the corresponding points-determining means 134 will be elucidated. In the corresponding points-determining means 134, a transport network as shown in Fig. 16(a) is supposed, and flows through the individual transport paths thereof are calculated. The network in Fig. 16(a) is constructed in such a way that the transport paths 165 having resistance values $R_{ij}$ are laid between constant current sources 161 as inflow sources which have current values corresponding to the respective differential values $BR(i)$ ($i = 1, 2, ...,$ $m - 1$) for the right eye image and constant current sources 162 as outflow sources which have current values corresponding to the respective differential values $BL(j)$ ($j = 1, 2,$ $..., m - 1$) for the left eye image. The connectional destinations of the transport paths 165 to fan out from each nodal point $i$ can be actually limited to a suitable number (for example, 9 or 11) including the opposing nodal point and neighboring ones, and only three destinations are exemplified in Fig. 16(a). In this regard, however, nodal points 163 and 164 at $i = 0$, m and $j = 0$, m are provided in order to compensate for uniqueness owned by the end parts of the images. More specifically, at the end parts of the right eye and left eye images, there are object points which exist in one image but which do not exist in the other image. Since the corresponding point of such object point does not exist in the opposite image, such points are caused to correspond to the aforementioned nodal points 163 and 164.

Conditional equations to be satisfied by the transport network thus constructed are as follows:

$$\left. \begin{array}{l} BR(i) = \sum_{j} x_{ij} \quad (i = 1, \ldots, m-1) \\[2mm] BL(j) = \sum_{i} x_{ij} \quad (j = 1, \ldots, m-1) \\[2mm] V_i - V_j = R_{ij} \cdot x_{ij} \quad (i = 0, \ldots, m; \ j = 0, \ldots, m) \end{array} \right\} \quad ..(12)$$

where $V_i$ $(i = 0, m) = 0$ and $V_j$ $(j = 0, m) = 0$ hold. Here, $V_i$ and $V_j$ denote the potentials of a nodal point 166 $(i = 0, \ldots, m)$ for right eye's image and a nodal point 167 $(j = 0, \ldots, m)$ for left eye's image respectively, and $x_{ij}$ denotes the value of current flowing from the nodal point _i_ to the nodal point _j_.

In the corresponding points-determining means 134, a series of calculations to be mentioned below are executed for the transport network several times, and the corresponding points are determined when a steady solution has been substantially reached.

(I) Set the initial potentials of the respective nodal points ($i = 1, ..., m - 1; j = 1, ..., m - 1$) and the initial values of the resistances $R_{ij}$ of the respective transport paths.

(II) Evaluate the current values $x_{ij}$ ($i = 0, ..., m$; $j = 0, ..., m$) of the respective branches in accordance with:

$$x_{ij} = (V_i - V_j)/R_{ij} \qquad ...(13)$$

(III) Update the potentials of the respective nodal points in accordance with:

$$\left. \begin{aligned} V_i' &= V_i + \mathcal{E}\left\{BR(i) - \sum_j x_{ij}\right\} \\ & \qquad\qquad\qquad i = 1, ..., m - 1 \\ V_j' &= V_j - \mathcal{E}\left\{BL(j) - \sum_i x_{ij}\right\} \\ & \qquad\qquad\qquad j = 1, ..., m - 1 \end{aligned} \right\} \quad ...(14)$$

Here, $\mathcal{E}$ denotes a correction factor.

(IV) Select a proper threshold value $\alpha$, and update the resistance values of the respective transport paths in accordance with the following rules:

$$\left. \begin{aligned} |x_{ij}| &< \quad : \text{Do not update.} \\ |x_{ij}| &\geq \quad : \text{Update with the following equation.} \end{aligned} \right\} ...(15)$$

$$R'_{k\ell} = R_{k\ell} - w(\overline{i-j} - \overline{k-\ell}) \cdot |x_{ij}|/\beta$$

$$\left(\begin{array}{l} k = i - 1, \ i, \ i + 1 \\ \ell = k - i + j - 3, \ k - i + j - 2, \ \dots, \ k - i + j + 3 \end{array}\right)$$

Here, $w(\overline{i-j} - \overline{k-\ell})$ denotes weighting factors as indicated in Fig. 16(b), and $\beta$ denotes a correction factor. After the updating process, the step (II) is returned to.

Putting

$$d = \sum_j (i - j) \ |x_{ij}| / \sum_j |x_{ij}|$$

when the steady solution has been obtained in the above way, the i-th small region corresponds to the (i + d)-th small region. By the way, when $\underline{d}$ contains a decimal part, this decimal part is interpreted as indicating a point between one small region and the next small region. When the processing for the small regions of certain size (for example, s = 8) has ended, the result is utilized to perform similar calculations for still smaller regions (for example, s = 4), whereby the corresponding relation in pixel unit can be finally determined.

The above are the processing steps in the corresponding points-determining means 134. Herein, the step (IV) has the following significance. In general, in the environment in which a moving object moves, the surface of the object is considered to smoothly change in most places (this is termed the "continuity assumption"), and a change in distance is small between the adjacent pixels. Besides, in determining the corresponding points, the correspondence is successively carried out from points of larger differential values, whereby erroneous correspondence can be avoided. More specifically, as indicated by the rules of the step (IV), if there is the transport path of greater flow, the flow between the nodal points $\underline{i}$ and $\underline{j}$ at both the ends of this transport path is increased, while between the nodal points neighboring those $\underline{i}$ and $\underline{j}$ ($j \pm 1, \bar{}\ j \pm 2, j \pm 3$), the resistance values are updated by the weighting $\underline{w}$ which decreases the flow as the point $\underline{j}$ becomes remoter. Further, as regards the transport paths extended from the nodal points neighboring that $\underline{i}$, the resistance values are updated by the same weighting as stated before (that is, the weighting which maximizes the resistance values at $j \pm 1$). Thus, the continuity assumption is satisfied.

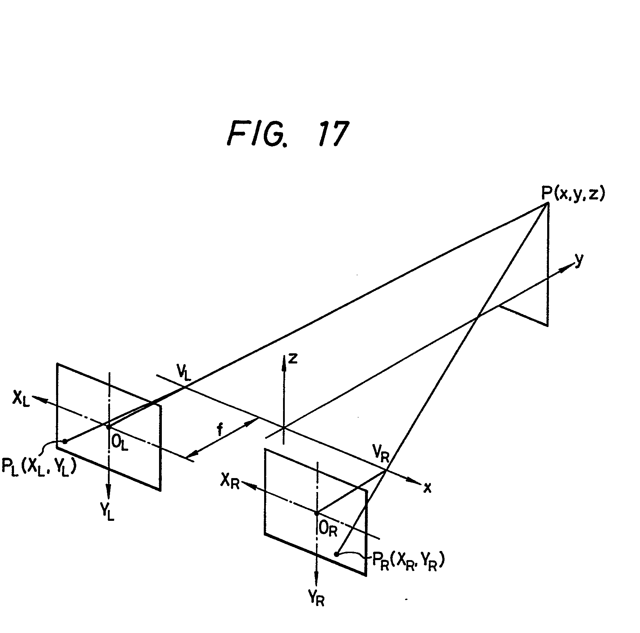

Referring now to Fig. 17, the distance calculator 135 will be elucidated. As illustrated in Fig. 17, $V_L$ and $V_R$ denote the central coordinates of the optical systems of the respective left and right cameras, $P_L$ ($x_L$, $y_L$) and $P_R$ ($x_R$, $y_R$) denote the positions of images which one point $P(x, y, z)$ on the surface of an object ahead forms on the imaging screens of the left and right

cameras, and $\underline{f}$ denotes the focal length of a lens. At
this time, the position of the point P is given by the
following as is well known:

$$
\begin{cases}
x = \dfrac{x_L \, v_R - x_R \, v_L}{x_L - x_R} \\[3mm]
y = f \, \dfrac{-v_L + v_R}{x_L - x_R} \\[3mm]
z = \dfrac{y_L \, (-v_L + v_R)}{x_L - x_R}
\end{cases}
\qquad \ldots(16)
$$

In the distance calculator 135, the three-dimensional
distances of the respective points on the object corresponding
to the points on the images are calculated using Eqs. (16)
and the values $(x_R, y_R)$ and $(x_L, y_L)$ of the respective
points which are the calculated results of the corresponding
points-determining means 134.

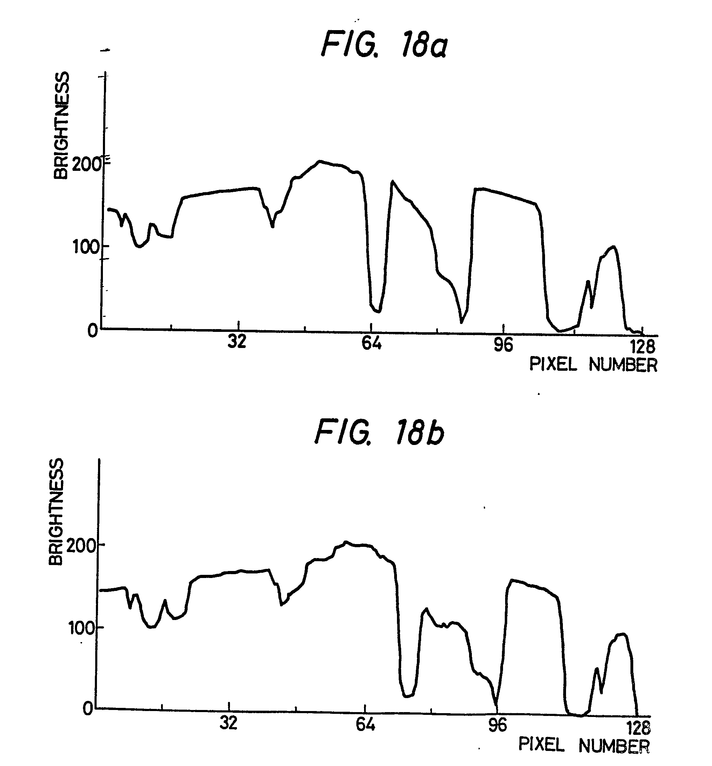

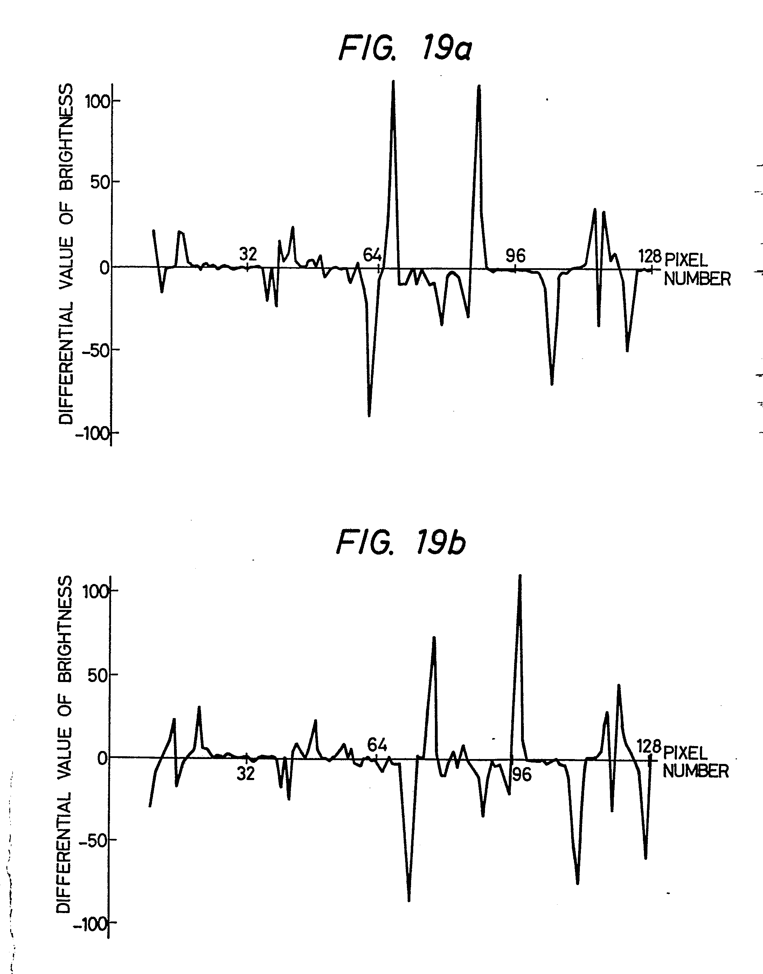

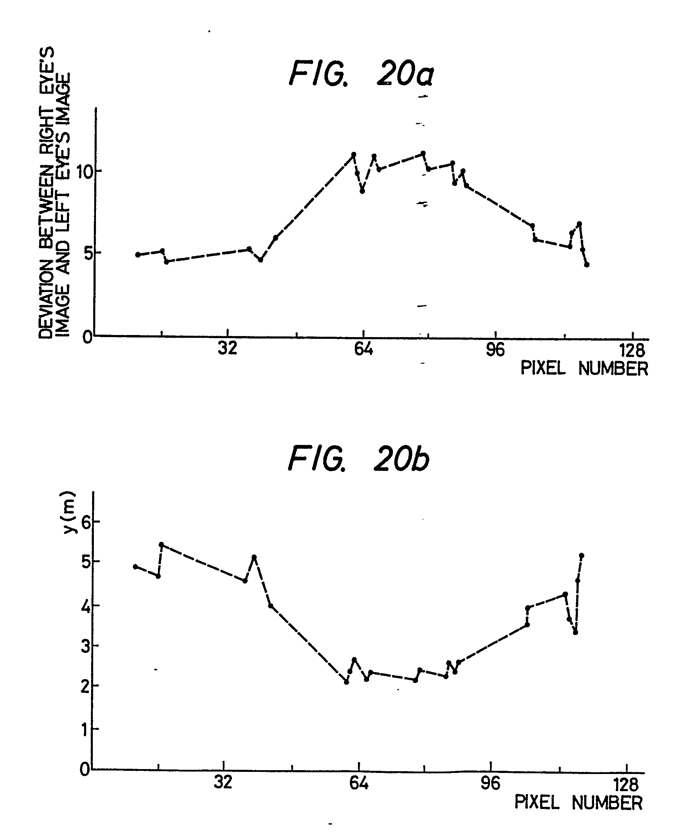

Examples of the processed results according to
the present embodiment are illustrated in Figs. 18(a)
and 18(b) - Figs. 20(a) and 20(b). Figs. 18(a) and
18(b) show right eye's image and left eye's image on
a certain pair of corresponding scanning lines as stored
in the image memory 132, respectively, and the axis
of abscissas represents pixel No., while the axis of
ordinates the brightness. As to the image data, the
mean brightnesses of every small regions of 8 x 8 pixels and the differential values thereof are calculated in the pre-processor 133, and the calculations for determining the corresponding points are executed in the corresponding points-determining means 134. Subsequently, the initial values of the resistances are determined using these results, and the series of calculations employing the mean brightnesses of every small regions of 4 x 4 pixels are executed. Thenceforth, the precision is gradually enhanced in similar fashion. Figs. 19(a) and 19(b) show differential values for brightnesses obtained every pixel (the data of Figs. 18(a) and 18(b) stored in the image memory 132), with the former corresponding to the right eye image and the latter to the left eye image. Results finally obtained in the corresponding points-determining means 134 are shown in Fig. 20(a). The axis of abscissas represents pixel No., while the axis of ordinates represents the number of pixels by which left eye's image deviates rightwards relative to right eye's image. Here, regarding only points whose differential values have absolute values of at least 20.0, the calculated results are indicated as they are, whereas the other points are interpolated between the aforementioned points. Fig. 20(b) shows the y-directional distances (depths) of results calculated on the basis of Fig. 20(a) by the three-dimensional distance calculator 135.

Thus far, the embodiments for a pair of stereo images have been stated. The present invention is not restricted to the case where corresponding points may be found on only the corresponding scanning lines as in the pair of stereo images, but it is also applicable to a case where corresponding points need to be found within a two-dimensional extent as in images obtained in such a way that an object relatively displaced in any desired direction is imaged at different times.

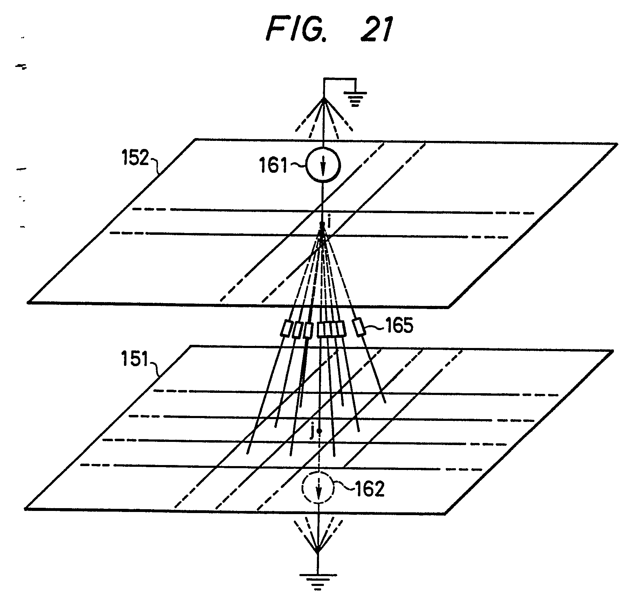

Fig. 21 shows a modification of the network for determining unidimensional corresponding points as depicted in Fig. 16(a), the modification being capable of determining corresponding points in two dimensions. Constituents corresponding to those of Fig. 16(a) are indicated by the same symbols. The network of Fig. 21 is repeatedly subjected to processes similar to those in the case of stereopsis, whereby the corresponding points can be determined between the images. A method for evaluating a distance to an object point on the basis of the corresponding points between the images may well be a method described in Japanese Patent Application No. 58-194251.

According to the present invention, in determining a pair of corresponding points, the density information items of images can be handled as they are (without quantizing them into binary values), and not only the correspondence between pixels, but also the correspondence of a pixel in one image to the position between pixels in the other image is possible. Accordingly, precise correspondence becomes possible, and in turn, the measuring accuracy of a position or a distance is enhanced.

PS/bi

Claims:

1. A method for determina corresponding points in images characterized by constructing a transport network which is composed of transport paths for transporting quantities of light of respective pixels from one image to the other image, and finding corresponding pixels on the basis of a transport state between pixels which permit the transport at a minimum cost.

2. A method for determining corresponding points in images according to Claim 1, wherein said transport network is constructed with its transport magnitudes being magnitudes which are obtained by subjecting the two images to differential calculations, and the corresponding pixels are found on the basis of the transport state between the pixels which permit the transport at the minimum cost.

3. A method for determining corresponding points in images according to Claim 1, wherein said transport network is constructed with its transport magnitudes being deviations from floating average values of the two images, and the corresponding pixels are found on the basis of the transport state between the pixels which permit the transport at the minimum cost.

4. A method for determining corresponding points in images according to Claim 1, wherein each of the two images is divided into a plurality of partial images, mean quantities of light of the respective divided partial images are subjected to processing in which the corresponding pixels are found on the basis of the transport state between the pixels permitting the transport at the minimum cost, and a size of said each partial image is gradually reduced, thereby to find the corresponding pixels.

5. A method for determining corresponding points in images according to Claim 1, wherein said transport state is a value of the transport magnitude in a case where the two images are a pair of stereo images obtained by two imaging means arranged at a short distance.

6. A method for determining corresponding points in images according to Claim 1, wherein said transport state is a distribution of values of the transport magnitudes in a case where the two images are successive images changing in succession.

7. A method for determining corresponding points in images according to Claim 2, wherein a size of a filter for use in the differential calculation is reduced stepwise, and processing in which the corresponding pixels are found on the basis of the transport state between the pixels permitting the transport at the minimum cost is repeated, thereby to detect the corresponding points.

8.   A method for determining
corresponding points in images characterized by constructing
a transport network model so that flows at inflow points
corresponding to various points of one image and at
outflow points corresponding to various points of the
other image may become magnitudes of a feature quantity
of corresponding points on the images, and determining
the pair of corresponding points composed of the inflow
point and the outflow point on the basis of a flow distribution
within the constructed network.

9.   A method for determining corresponding points
in images according to Claim 8, wherein said transport
network model is an electric circuit in which the flows
correspond to current values, and transport paths between
the respective points correspond to resistances.

10. A method for determining corresponding points
in images according to Claim 8, wherein the feature
quantity of each point of the image is a rate of change
in brightness relative to the adjoining points.

## FIG. 1

## FIG. 2

## FIG. 3a

## FIG. 3b

FIG. 4

$R_3$ $R_4$ $R_5$       $R_{i-1}$ $R_i$ $R_{i+1}$       $R_{n-2}$

31

33

32

$L_3$ $L_4$ $L_5$       $L_{i-1}$ $L_i$ $L_{i+1}$       $L_{n-2}$

FIG. 5

41

42

FIG. 6a

50

FIG. 6b

## FIG. 7

61

62

## FIG. 8a

| | | | | | | | | | |
|---|---|---|---|---|---|---|---|---|---|
| 68.6 | 55.8 | 47.4 | 40.6 | 38.5 | 34.1 | 29.7 | 28.5 | 27.2 | 27.0 |
| 114.1 | 99.8 | 88.5 | 80.0 | 68.1 | 57.4 | 51.8 | 47.4 | 46.9 | 43.8 |
| 133.1 | 121.6 | 110.8 | 101.4 | 92.1 | 77.0 | 68.8 | 63.8 | 63.2 | 58.9 |
| 175.8 | 195.6 | 188.7 | 180.6 | 169.7 | 129.4 | 76.1 | 72.6 | 69.8 | 64.5 |
| 207.6 | 228.1 | 218.6 | 208.7 | 195.6 | 127.6 | 80.2 | 75.4 | 71.8 | 66.0 |
| 119.6 | 124.9 | 119.0 | 111.6 | 103.2 | 77.5 | 57.8 | 60.2 | 60.5 | 53.2 |
| 49.3 | 52.8 | 49.3 | 48.2 | 42.8 | 33.0 | 24.6 | 20.0 | 22.4 | 20.9 |
| 20.8 | 25.6 | 24.0 | 20.9 | 21.1 | 17.9 | 15.4 | 5.7 | 7.1 | 12.9 |
| 22.1 | 19.3 | 20.3 | 17.4 | 18.9 | 17.6 | 14.1 | 10.7 | 9.0 | 13.3 |
| 35.4 | 32.4 | 22.5 | 9.3 | 3.9 | 3.3 | 2.2 | 2.3 | 1.7 | 2.6 |

## FIG. 8b

| | | | | | | | | | |
|---|---|---|---|---|---|---|---|---|---|
| 82.3 | 73.1 | 66.3 | 60.9 | 55.4 | 49.9 | 42.6 | 40.4 | 38.3 | 38.3 |
| 94.5 | 88.1 | 88.8 | 77.6 | 74.0 | 67.3 | 57.6 | 52.8 | 50.0 | 47.8 |
| 122.6 | 130.4 | 164.3 | 162.5 | 157.5 | 149.4 | 121.8 | 60.4 | 52.9 | 50.6 |
| 122.4 | 158.3 | 190.7 | 186.3 | 179.1 | 170.6 | 124.1 | 38.8 | 54.9 | 52.3 |
| 70.9 | 89.2 | 98.7 | 95.6 | 91.9 | 82.6 | 63.6 | 42.9 | 38.9 | 42.8 |
| 33.3 | 38.3 | 39.2 | 40.4 | 37.6 | 35.1 | 24.4 | 19.1 | 12.8 | 12.4 |
| 15.7 | 17.3 | 13.9 | 15.5 | 15.1 | 16.3 | 13.2 | 12.1 | 7.8 | 1.1 |
| 15.6 | 12.9 | 13.8 | 14.3 | 16.1 | 13.8 | 13.8 | 12.4 | 10.8 | 8.9 |
| 27.1 | 30.3 | 31.1 | 29.3 | 10.1 | 3.4 | 4.1 | 0.4 | 1.5 | 0.7 |
| 17.8 | 24.6 | 27.1 | 22.6 | 8.2 | 0.4 | 0.2 | 0.0 | 0.0 | 0.0 |

## FIG. 9a

```
 19.0  16.0  21.5   4.3  -1.2   3.8  -1.4   6.0
-53.0 -56.9 -57.9 -47.9 -39.6   6.3   3.4  13.4
 68.4  49.2  53.8  81.1  67.1 -46.4   5.1   7.3
165.6 129.8 128.4 173.3  27.8 -16.2  16.8  15.3
-20.0 -28.3 -32.6 -14.8 -11.6 -11.3  27.1  34.4
-37.8 -47.0 -31.8 -34.5 -30.8 -27.8 -32.9 -18.8
-14.4 -20.0 -27.2 -16.0 -15.4  -0.6 -30.5 -21.5
-23.1  -2.2   0.1  15.7  16.3  10.3  11.7   3.3
```

## FIG. 9b

```
-29.3 -61.1 -70.8 -61.8 -61.9 -54.2   2.7   8.3
-11.6  89.8  64.3  64.9  80.6  95.8 -44.8  -4.1
110.5 155.1 117.3 110.2 147.3  81.4 -47.1  16.9
 -9.5 -19.9 -34.8 -27.4 -31.0 -19.5  -8.6   2.1
-25.7 -34.5 -26.4 -32.3 -20.3 -33.3 -15.9 -27.1
-11.8 -30.3 -21.7 -24.9 -12.2 -13.8  -4.2  -5.7
-25.3 -16.9 -17.5 -11.3   5.5  11.5  12.8  12.7
 25.6  23.7  39.3 -16.8 -14.8  -1.2 -16.6  -5.9
```

## FIG. 10

## FIG. 11a

## FIG. 11b

## FIG. 12

```
┌──────────┐
│  IMAGE   │
│  MEMORY  │
└──────────┘
            121       122          123          124
┌──────────┐      ┌─────────┐  ┌─────────┐  ┌─────────┐
│  IMAGE   │      │  NODE   │  │ CURRENT │  │ CORRENT │
│  MEMORY  │      │ CURRENT │  │  COST   │  │ MEMORY  │
└──────────┘      │ MEMORY  │  │ MEMORY  │  │         │
                  └─────────┘  └─────────┘  └─────────┘
                                                              126
        ┌──────────────────────────────────┐   ┌────────────────┐
        │                                  │   │   A PAIR OF     │
        │          PROCESSOR               │   │ CORRESPONDING  │
        │                                  │   │ POINTS MEMORY  │
        └──────────────────────────────────┘   └────────────────┘
                              125
```

## FIG. 13

```
                                                              130
   131          132          133     ┌─────────────┐ 134    135
┌────────┐   ┌────────┐   ┌─────────┐│  A PAIR OF  │  ┌────────────┐
│   TV   │   │ IMAGE  │   │  PRE-   ││CORRESPONDING│  │  DISTANCE  │
│ CAMERA │   │ MEMORY │   │PROCESSOR││   POINTS    │  │ CALCULATOR │
└────────┘   └────────┘   └─────────┘│ DETERMINING │  └────────────┘
                                     │    MEANS    │
                                     └─────────────┘
                              PROCESSOR
```

FIG. 14

P

145

141

143

144

142

FIG. 15

151

152

$154_1$   $154_i$   $154_m$   153   $154_1$   $154_i$   $154_m$

ℓ

S

ℓ

S

y

x

y

x

## FIG. 16a

## FIG. 16b

FIG. 17

P(x,y,z)

## FIG. 18a

## FIG. 18b

0158984

FIG. 19a

FIG. 19b

## FIG. 20a

Y-axis: DEVIATION BETWEEN RIGHT EYE'S IMAGE AND LEFT EYE'S IMAGE

X-axis: PIXEL NUMBER

## FIG. 20b

Y-axis: y(m)

X-axis: PIXEL NUMBER

13/13 0158984

**FIG. 21**